# EUROPEAN PATENT APPLICATION

(11) **EP 4 586 558 A1**
(43) Date of publication of application: **16.07.2025**
(21) Application number: 23864390.2
(22) Date of filing: 13.06.2023
(51) Int. Cl.: H04L 12/43

(54) **DATA SYNCHRONIZATION METHOD AND APPARATUS FOR PASSIVE OPTICAL NETWORK, AND DATA SYNCHRONIZATION SYSTEM**

(30) Priority: 13.09.2022 CN 202211119421
(71) Applicant: ZTE Corporation, Shenzhen, Guangdong 518057 (CN)
(72) Inventor: YANG, Bo, Shenzhen, Guangdong 518057 (CN); LI, Mingsheng, Shenzhen, Guangdong 518057 (CN); HUANG, Xingang, Shenzhen, Guangdong 518057 (CN)
(74) Representative: Ziebig Hengelhaupt Intellectual Property Attorneys Patentanwaltskanzlei PartGmbB
(86) International application number: PCT/CN2023/099984
(87) International publication number: WO 2024/055651

(57) **Abstract**

Provided is a data synchronization method for a passive optical network. The method comprises: an alignment and restoration step of synchronously aligning a plurality of first data signals, and restoring the aligned plurality of first data signals into a second data signal; performing passive optical network synchronization verification on the second data signal; if the second data signal fails to pass the passive optical network synchronization verification, turning to the alignment and restoration step; and if the second data signal passes the passive optical network synchronization verification, determining that synchronization is successful.

## Description

The present disclosure claims priority to Chinese Patent Application No. 202211119421.7, filed on September 13, 2022, the entire content of which is incorporated in the present disclosure by reference.

### TECHNICAL FIELD

The present disclosure relates to the technical field of passive optical networks and in particular, to a data synchronization method and apparatus for a passive optical network, and a data synchronization system.

### BACKGROUND

Currently, optical access networks (Optical Access Network, OAN) based on time division multiplexing-passive optical network (Time Division Multiplexin-Passive Optical Network, TDM-PON) technologies are rapidly developing, and passive optical network (Passive Optical Network, PON) systems need higher data rates.

### SUMMARY

In a first aspect, a data synchronization method for a passive optical network is provided. The method includes: performing an aligning and recovering operation including: performing synchronization alignment on multiple paths of first data signals, and recovering aligned multiple paths of first data signals into a path of second data signal; performing passive optical network synchronization verification on the second data signal; and in a case where the second data signal does not pass the passive optical network synchronization verification, returning to the aligning and recovering operation, or in a case where the second data signal passes the passive optical network synchronization verification, determining that synchronization is successful.

In a second aspect, a data synchronization apparatus for a passive optical network is provided. The synchronization apparatus includes a data recovering module and a passive optical network synchronization module. The data recovering module is configured to perform an aligning and recovering operation. The aligning and recovering operation includes performing synchronization alignment on multiple paths of first data signals, and recovering aligned multiple paths of first data signals into a path of second data signal. The passive optical network synchronization module is configured to perform passive optical network synchronization verification on the second data signal; and in a case where the second data signal does not pass the passive optical network synchronization verification, indicate the data recovering module to return to perform the aligning and recovering operation, or in a case where the second data signal passes the passive optical network synchronization verification, determine that synchronization is successful.

In a third aspect, an electronic device is further provided. The electronic device includes a processor and a memory. The memory is configured to store instructions executable by the processor. The processor is configured to perform the data synchronization method for the passive optical network as described in the first aspect and any one of the embodiments thereof.

In a fourth aspect, a data synchronization system is further provided. The data synchronization system includes a data splitting apparatus, a first passive optical network device, a second passive optical network device, and a synchronization apparatus, that are connected in sequence. The data splitting apparatus is configured to split a third data signal into multiple paths of first data signals, and transmit the multiple paths of first data signals to the synchronization apparatus via the first passive optical network device and the second passive optical network device. The synchronization apparatus is configured to perform the data synchronization method for the passive optical network as described in the first aspect and any one of the embodiments thereof.

In a fifth aspect, a computer-readable storage medium is further provided. Computer instructions are stored on the computer-readable storage medium. When the computer instructions are executed on an electronic device, the electronic device is enabled to perform the data synchronization method for the passive optical network as described in the first aspect and any one of the embodiments thereof.

### BRIEF DESCRIPTION OF THE DRAWINGS

FIG. 1 is a schematic diagram of an architecture of a passive optical network according to some embodiments.
FIG. 2 is a schematic diagram of a downlink PON frame according to some embodiments.
FIG. 3 is a schematic diagram of an uplink PON frame according to some embodiments.
FIG. 4 is a schematic diagram of an architecture of a data synchronization system according to some embodiments.
FIG. 5 is a flow chart of a data synchronization method for a passive optical network according to some embodiments.
FIG. 6 is a schematic diagram of a split result of a 50G PON downlink frame according to some embodiments.
FIG. 7 is a schematic diagram of running of a downlink PON synchronization state machine according to some embodiments.
FIG. 8 is another schematic diagram of running of a downlink PON synchronization state machine according to some embodiments.
FIG. 9 is a structural schematic diagram of a synchronization apparatus according to some embodiments.
FIG. 10 is a structural schematic diagram of an electronic device according to some embodiments.

### DETAILED DESCRIPTION

Technical solutions in the embodiments of the present disclosure will be described clearly and completely below in conjunction with the drawings in the embodiments of the present disclosure. However, the described embodiments are only a part of the embodiments in the present disclosure, not all of the embodiments. All other embodiments obtained based on the embodiments in the present disclosure, by those ordinary skilled in the art without making creative labor, fall within the protection scope of the present disclosure.

Below, the terms "first", "second" or the like are used for descriptive purposes only, and cannot be understood as indicating or implying relative importance or implicitly indicating the number of the indicated technical features.

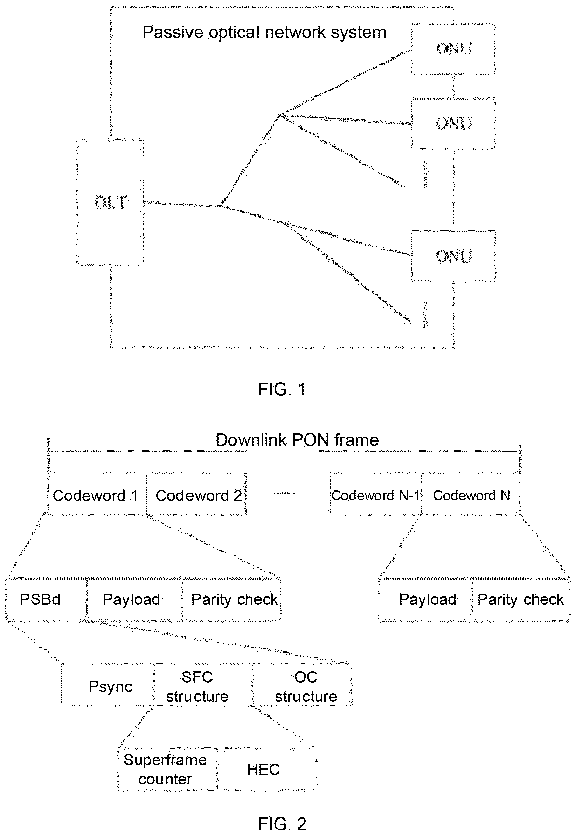

The passive optical network (Passive Optical Network, PON) is a single fiber bidirectional optical access network (Optical Access Network, OAN) using a point to multipoint (point to multipoint, P2MP) structure. FIG. 1 is a schematic diagram of an architecture of a passive optical network according to some embodiments. For example, as shown in FIG. 1, the PON system mainly includes three parts: an optical line terminal (Optical Line Terminal, OLT), an optical distribution network (Optical Distribution Network, ODN), and a client (user end) optical network unit (Optical Network Unit, ONU). OLT is located at a local end, to be responsible for distributing and controlling the connection of channels, and monitoring, managing and maintaining the entire PON in real-time. The ONU is located at a user end (or a user resident side), to implement access to user terminals. The ODN includes a passive optical splitter (Passive Optical Splitter, POS) and an optical fiber line, to implement the network connection between the OLT and respective ONUs.

In some embodiments, in a downlink direction of the passive optical network (i. e., a data transmission direction from the OLT to the ONU), a downlink data signal sent by the OLT reaches the respective ONUs via the ODN. In an uplink direction of the passive optical network (i. e., a data transmission direction from the ONU to the OLT), uplink data signals sent by the respective ONUs only reach the OLT, but do not reach the other ONUs.

FIG. 2 is a schematic diagram of a downlink PON frame according to some embodiments. For example, as shown in FIG. 2, the downlink PON frame includes a plurality of codewords (for example, codeword 1 to codeword N in FIG. 2). The plurality of codewords in the downlink PON frame include a first payload (Payload) and a first parity check field, respectively. The first payload includes data (e. g., user data) that the OLT needs to transfer to the ONU. The first parity check field is used to check the accuracy of the codeword transmission. In some examples, in the downlink PON frame, except that a first codeword (i. e., codeword 1 in FIG. 2) in the downlink PON frame also includes a downlink physical synchronization block (physical synchronization block downstream, PSBd), the remaining codewords (i. e., codeword 2 to codeword N in FIG. 2) in the downlink PON frame do not include a PSBd. In some examples, the codewords in the downlink PON frame may be protected by using a forward error correction (Forward Error Correction, FEC) method, and the codewords protected by using the FEC method may be abbreviated as FEC codewords.

Referring to FIG. 2, the PSBd includes a physical synchronization sequence (Psync) field, a superframe counter structure (SFC structure) field, and an operational control structure (OC structure) field.

The Psync field is used to identify the downlink data frame generated by the OLT. That is, the Psync field is used by a passive optical network device (such as the ONU) to synchronize a boundary of the PON frame in the downlink data signal. The Psync field is used to carry a preset bit sequence. In the related standards, the encoding of the bit sequence of the Psync field is 0xC5E51840FD59BB49.

The SFC structure field includes an SFC and a hybrid error correction (Hybrid Error Correction, HEC) field. An SFC value of each downlink PON frame is increased by 1 with respect to an SFC value of a previous downlink PON frame. When an SFC value of a certain downlink PON frame reaches the maximum, an SFC value of a next downlink PON frame after this downlink PON frame is configured as 0.

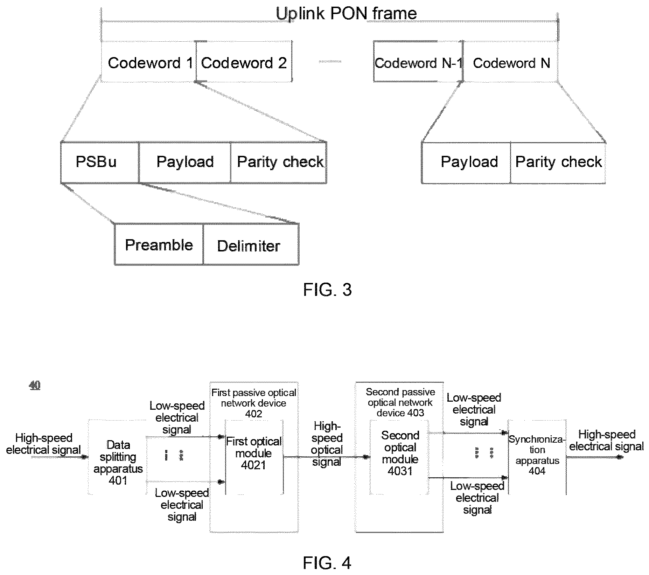

FIG. 3 is a schematic diagram of an uplink PON frame according to some embodiments. For example, as shown in FIG. 3, the uplink PON frame includes a plurality of codewords (for example, codeword 1 to codeword N in FIG. 3). The plurality of codewords in the uplink PON frame include a second payload and a second parity check field, respectively. The second payload includes data (e. g. user data) that the ONU needs to transfer to the OLT. The second parity check field is used to check the accuracy of the codeword transmission in the uplink PON frame. A first codeword in the uplink PON frame (i. e., codeword 1 in FIG. 3) also includes an uplink physical synchronization block (physical synchronization block upstream, PSBu), and the remaining codewords in the uplink PON frame (i. e., codeword 2 to codeword N in FIG. 3) do not include a PSBu.

Referring to FIG. 3, the PSBu includes a preamble and a delimiter (Delimiter). The preamble is used to discover a burst signal by an autocorrelation peak detection method, and the delimiter is used to indicate a start bit and an end bit of the preamble. Also, the preamble and delimiter may include signal data, and the signal data is used to determine the presence of a physical interface (PHY) burst signal from the ONU, depict the PHY burst signal, and determine a signal clock, so as to correctly recover the transmission.

With the rapid development of the optical access network of the time division multiplexing-passive optical network (TDM-PON) technology, the demand of the optical access network with a higher bandwidth places higher requirements on the bandwidth of the passive optical network. Based on the scale deployment of 10 gigabit passive optical network (10 Gigabit-Capable Passive Optical Network, 10G PON), 50 gigabit passive optical network (50G PON) has begun to develop. Also, in order to enable data of the passive optical network with a high data rate to be transmitted accurately and stably, in the data transmission, usually by using an interface technology of a high-performance serializer/deserializer (SerDes), a path of high-speed PON data signal is converted into multiple paths of parallel low-speed data signals which are then transmitted, and afterward, the multiple paths of parallel low-speed data signals are synchronized to recover into a path of high-speed PON data signal.

In the 50G PON system, a device electrical interface of a 50G optical module with the OLT and the ONU may have three SerDes interface forms, such as 50G non-return to zero code (Non Return to Zero, NRZ), 50G four-level pulse amplitude modulation (Pulse Amplitude Modulation 4, PAM 4) and 2×25G NRZ, etc. The 2×25G NRZ interface form is relatively mature, with the least damage to the quality of electrical signals, has been widely used in the field of the data communication optical module, and is also an excellent interface form in the 50G PON system. However, in a case where the device electrical interface of the 50G PON optical module with the OLT and the ONU is the 2 × 25G NRZ interface form, when a digital signal processor (Digital Signal Processor, DSP) inside the optical module processes the data, there may be problems of two channels of data being out of order or the channels of data being not able to be aligned and reach at the same time, due to the single board routing. When the line rate of the PON system rises to 100Gb/s or 200Gb/s or above, the electrical interface between the optical module and the device becomes multiple paths of parallel electrical interfaces with low data rates, and the case in which the data cannot be synchronized is more complicated.

When dealing with the problems that multiple data channels disorder or the data cannot be aligned and reach at the same time, the related technology is mainly to split a characteristic codeword in the PON signal (in the uplink data signal, the characteristic codeword is the PSBu, and in the downlink data signal, the characteristic codeword is the PSBd) into multiple parts according to bits or bytes, as alignment flag bits of multiple paths of low-speed data signals, but this will shorten the length of the alignment flag bits. With the increase of the data rate of the passive optical network, and the amount of data is increasing, false synchronization is easy to occur when aligning and synchronization are performed on the multiple paths of low-speed data signals by the short alignment flag bits. Also, false synchronization is also easy to occur in the synchronization process of the multiple paths of parallel low-speed data signals.

There are two methods in the relevant technology to reduce the probability of the false synchronization. One method is to increase the length of the PSBd and PSBu, but this will increase the system overhead of the passive optical network. Another method is to add an FEC check success judgment condition in the characteristic codeword. However, by this method, as the data rate increases and the amount of data increases in the passive optical network, the data processing delay will increase, and the probability of the false synchronization is still very high.

In order to solve the above problems, some embodiments of the present disclosure provide a data synchronization method for a passive optical network. The idea of this method is to: perform PON synchronization verification on the high-speed data signal recovered from the data, to judge whether the false synchronization occurs; and in a case where the false synchronization occurs, re-perform the aligning and recovering operation on the multiple paths of low-speed data signals, to improve the synchronization success rate of the multiple paths of low-speed data signals. In this way, on the one hand, the length of the characteristic codeword does not need to be increased, thereby avoiding the introduction of additional transmission overhead. On the other hand, since there is no need to add the FEC check, the synchronization of the PON signals may be completed first in a case of skipping the FEC decoding, to reduce the signal processing delay.

FIG. 4 is a schematic diagram of an architecture of a data synchronization system according to some embodiments. The above-mentioned data synchronization method is applicable to the data synchronization system 40. As shown in FIG. 4, the data synchronization system 40 includes: a data splitting apparatus 401, a first passive optical network device 402, a second passive optical network device 403, and a synchronization apparatus 404.

The first passive optical network device 402 may include a first optical module 4021, and the second passive optical network device 403 may include a second optical module 4031. In some embodiments of the present disclosure, the optical module (e. g., the first optical module 4021 or the second optical module 4031) may be configured to perform the conversion between an optical signal and electrical signals. In some examples, the optical module may be a pluggable optical module, or an onboard optical component, or the like, which is not limited in the present disclosure.

It should be noted that in the process of the downlink data transmission, the first passive optical network device 402 may be the OLT, the second passive optical network device 403 may be the ONU, in the process of the uplink data transmission, the first passive optical network device 402 may be the ONU, and the second passive optical network device 403 may be the OLT. It can be understood that the first passive optical network device 402 and the second passive optical network device 403 may be communicated via the ODN.

The data splitting apparatus 401 is connected to the first optical module 4021 in the first passive optical network device 402. The data splitting apparatus 401 is configured to split a path of high-speed electrical signal into multiple paths of low-speed electrical signals, and transmit the multiple paths of low-speed electrical signals to the first optical module 4021.

The first optical module 4021 is connected to the second optical module 4031 in the second passive optical network device 403. The first optical module 4021 is configured to convert the multiple paths of low-speed electrical signals into a path of high-speed optical signal and transmit this path of the high-speed optical signal to the second optical module 4031.

The second optical module 4031 is connected to the synchronization apparatus 404. The second optical module 4031 is configured to convert a path of high-speed optical signal to multiple paths of low-speed electrical signals, and transmit the multiple paths of low-speed electrical signals to the synchronization apparatus 404.

The synchronization apparatus 404 is configured to recover the multiple paths of low-speed electrical signals into a path of high-speed electrical signal. Here, the synchronization apparatus 404 may recover the multiple paths of low-speed electrical signals into a correct path of a high-speed electrical signal by performing the data synchronization method in some embodiments of the present disclosure.

In some examples, the synchronization apparatus 404 may be independent of the second passive optical network device 403, or may be integrated in the second passive optical network device 403. The data splitting apparatus 401 may be independent of the first passive optical network device 402, or may be integrated in the first passive optical network device 402.

The data synchronization method for the passive optical network provided in some embodiments of the present disclosure is introduced below in detail in conjunction with the drawings.

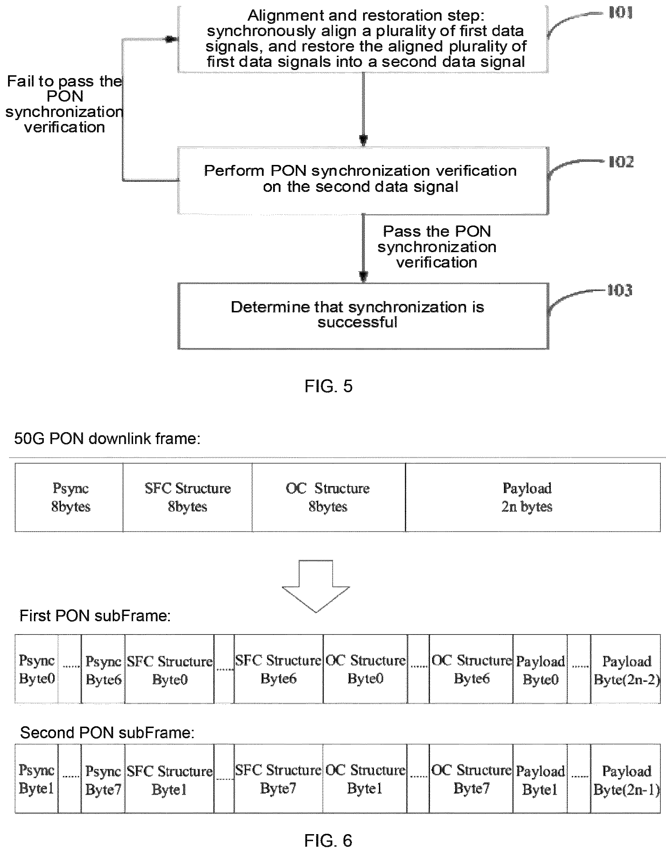

Some embodiments of the present disclosure provide a data synchronization method for a passive optical network, and the method may be applied to the synchronization apparatus 404 in the data synchronization system 40 shown in FIG. 4. As shown in FIG. 5, the method includes step 101 to step 103 (S101 to S103).

In step 101, perform an aligning and recovering operation, where the aligning and recovering operation includes: performing synchronization alignment on multiple paths of first data signals, and recovering aligned multiple paths of first data signals into a path of second data signal.

Here, the multiple paths of first data signals may be obtained by splitting a third data signal. The splitting method may be splitting in units of a single byte, splitting in units of a single bit, splitting in units of double bytes, or splitting in units of a half of the Psync length, which is not limited in the present disclosure.

It can be understood that the third data signal includes one or more continuous PON frames. Splitting the third data signal, may be understood as splitting the PON frame in the third data signal. After splitting the third data signal, the respective paths of first data signals include a split part of the PON frame, respectively. For ease of description, the split parts of the PON frame may be called PON subframes hereinafter.

FIG. 6 is a schematic diagram of a split result of a 50G PON downlink frame according to some embodiments. For example, as shown in FIG. 6, the 50G PON downlink frame includes a Psync field with 8 bytes, an SFC structure field with 8 bytes, an OC structure field with 8 bytes, and a payload with 2n bytes (such as the first payload). In a case of splitting the 50G PON downlink frame in units of bytes, a first PON subframe includes even bytes of the Psync field, even bytes of the SFC structure field, even bytes of the OC structure field, and even bytes of the Payload field in the 50G PON downlink frame. A second PON subframe includes odd bytes of the Psync field, odd bytes of the SFC structure field, odd bytes of the OC structure field and odd bytes of the Payload field in the 50G PON downlink frame.

In order to enable the multiple paths of first data signals to be correctly recovered into a path of the third data signal, respective paths of first data signals need to carry corresponding synchronization information so that the multiple paths of first data signals can be synchronously aligned. The synchronization information may have different names, such as a synchronization header, an alignment flag bit, etc., which is not limited in the present disclosure. It can be understood that the synchronization information corresponding to the multiple paths of first data signals is also obtained by splitting target information carried by the third data signal.

For example, for the uplink transmission, the synchronization information corresponding to the respective paths of first data signals is obtained by splitting all or a part of fields in the PSBu. For example, the synchronization information corresponding to the respective paths of first data signals may be obtained by splitting the delimiter in the PSBu.

For another example, for the downlink transmission, the synchronization information corresponding to the respective paths of first data signals is obtained by splitting all or a part of fields in the PSBd. For example, the synchronization information corresponding to the respective paths of first data signals may be obtained by splitting the Psync in the PSBd.

In conjunction with FIG. 6, the downlink direction is taken as an example for illustration. In a case where a 50G data signal in the 50G PON is split into two paths of 25G data signals, synchronization information corresponding to a first data signal 11 is a combination of Psync Byte0, Psync Byte2, Psync Byte4, and Psync Byte6d; synchronization information corresponding to a first data signal 12 is a combination of Psync Byte1, Psync Byte3, Psync Byte5, and Psync Byte7. For example, assuming that Pysnc is 0xC5E51840FD59BB49, the synchronization information Pysnc_lane0 corresponding to the first data signal 11 is 0xC518FDBB, and the synchronization information Pysnc_lane1 corresponding to the first data signal 12 is 0xE5405949.

In some embodiments, performing the synchronization alignment on the respective paths of first data signals among the multiple paths of first data signals, includes: searching for synchronization information of the respective paths of first data signals among the multiple paths of first data signals, based on a first corresponding relationship, where the first corresponding relationship is used to indicate the synchronization information corresponding to the respective paths of first data signals; and after the synchronization information corresponding to the respective paths of first data signals is successfully searched out, aligning the respective paths of first data signals based on searched synchronization information corresponding to the respective paths of first data signals.

In some examples, the first corresponding relationship may be pre-configured in the synchronization apparatus 404. Alternatively, taking the data synchronization system 40 shown in FIG. 4 as an example, the first corresponding relationship may be determined by mutual negotiation between the synchronization apparatus 404 and the data splitting apparatus 401. In some examples, the first optical module 4021 and/or the second optical module 4031 may also participate in the negotiation process of the first corresponding relationship.

In this way, in the synchronization alignment process, the synchronization apparatus 404 only needs to search the synchronization information in the respective paths of first data signals according to one corresponding relationship, which may reduce the search complexity and simplify the structure of the synchronization apparatus 404.

In some embodiments, the data synchronization method further includes: in a case where the synchronization information corresponding to the respective paths of first data signals is not successfully searched out after a first preset duration, searching for synchronization information of respective paths of first data signals among the multiple paths of first data signals based on a second corresponding relationship, where the second corresponding relationship is used to indicate the synchronization information corresponding to the respective paths of first data signals, and synchronization signal corresponding to at least one path of a first data signal in the second corresponding relationship is different from synchronization information corresponding to the at least one path of a first data signal in the first corresponding relationship. The above-mentioned first preset duration may be pre-configured, or the above-mentioned first preset duration may be determined by the synchronization apparatus 404 according to its own data processing situation, which is not limited in the present disclosure.

It can be understood that in the synchronization alignment process, if the synchronization information corresponding to the respective paths of first data signals is not searched out for a long time, it is indicated that the first corresponding relationship is incorrect. Therefore, the synchronization apparatus 404 may replace the corresponding relationship used in the synchronization alignment process (i. e., with the second correspondence), to quickly and successfully search for the synchronization information corresponding to the respective paths of first data signals.

For example, assuming that the first corresponding relationship is used to indicate that the synchronization information corresponding to the first data signal 11 is 0xC518FDBB, and the synchronization information corresponding to the first data signal 12 is 0xE5405949; and the second corresponding relationship is used to indicate that the synchronization information corresponding to the first data signal 11 is 0xE5405949, and the synchronization information corresponding to the first data signal 12 is 0xC518FDBB. In this case, the synchronization apparatus 404 may first based on the first corresponding relationship, search for 0xC518FDBB in the first data signal 11 and search for 0xE5405949 in the first data signal 12. After the synchronization information corresponding to the respective paths of first data signals is not searched out within the first preset duration, the synchronization apparatus 404 may, based on the second corresponding relationship, search for 0xE5405949 in the first data signal 11 and search for 0xC518FDBB in the first data signal 12.

In some other embodiments, performing the synchronization alignment on the respective paths of first data signals among the multiple paths of first data signals, includes: performing multiple search operations simultaneously, where respective search operations are used to search for synchronization information of respective paths of first data signals among the multiple paths of first data signals based on corresponding relationships corresponding to the search operations, different search operations correspond to different corresponding relationships, and the corresponding relationships are used to indicate the synchronization information corresponding to the respective paths of first data signals; and after the synchronization information corresponding to the respective paths of first data signals is successfully searched out through a target search operation, aligning the respective paths of first data signals based on the synchronization information corresponding to the respective paths of first data signals searched by the target search operation, where the target search operation is any one search operation of the multiple search operations.

In this way, in the synchronization alignment process, the synchronization apparatus 404 may search for the synchronization information in the respective paths of first data signals according to the plurality of corresponding relationships simultaneously, so as to quickly and successfully search for the synchronization information corresponding to the respective paths of first data signals.

For example, the synchronization apparatus 404 may perform a first search operation and a second search operation simultaneously. The first search operation is used to search for 0xC518FDBB in the first data signal 11 and search for 0xE5405949 in the first data signal 12. The second search operation is used to search for 0xE5405949 in the first data signal 11 and search for 0xC518FDBB in the first data signal 12. When successful based on the second search operation, the alignment of the first data signal 11 and the first data signal 12 may be performed according to the position of 0xE5405949 in the first data signal 11 and the position of 0xC518FDBB in the first data signal 12.

It should be noted that searching for the corresponding synchronization information in the first data signal may be understood as looking for a target bit sequence matching the synchronization information in the first data signal. In some examples, the target bit sequence matching the synchronization information may mean that the target bit sequence is exactly the same as the synchronization information; or a number of bits that are different between the target bit sequence and the synchronization information is less than or equal to a preset number. For example, the preset number may be 2.

In addition, the alignment of the multiple paths of first data signals may be understood as: performing the alignment on the multiple paths of first data signals based on a position of a first bit in the synchronization information searched from the respective paths of first data signals.

In some embodiments, in the aligning and recovering operation, the aligned multiple paths of first data signals are recovered into a path of second data signal in a case where a preset condition is satisfied. The preset condition may include: successfully searching for the corresponding synchronization information from the respective paths of first data signals continuously for K times, and K is a positive integer. It can be understood that in a case where K is greater than 1, to perform data recovery on the multiple paths of first data information, the corresponding synchronization information needs to be successfully searched from the respective paths of first data signals continuously for several times, which may reduce the probability of false synchronization of the multiple paths of first data signals. Also, the larger the K is, the lower the probability of false synchronization of the multiple paths of first data signals is.

In some embodiments, recovering the aligned multiple paths of first data signals into a path of second data signal, may include: merging the multiple paths of first data signals into a path of second data signal in an interleaving manner. The manner of data recovery corresponds to the manner of data splitting. In other words, if the data splitting is in units of bytes, the data recovery also is in units of bytes. If the data splitting is in units of bits, the data recovery also is in units of bits.

As an exemplary illustration in conjunction with FIG. 6, synchronization information Pysnc_lane0 is successfully searched out in the first data signal 11, and the synchronization information Pysnc_lane0 is 0xC518FDBB; and synchronization information Pysnc_lane1 is successfully searched out in the first data signal 12, and the synchronization information Pysnc_lane1 is 0xE5405949. Since Pysnc_lane0 is composed of even bytes in the Pysnc, Pysnc_lane1 is composed of odd bytes in the Pysnc. Therefore, the bytes in the first data signal 11 may be taken as even bytes in the second data signal, and the bytes in the first data signal 12 may be taken as odd bytes in the second data signal, thereby merging the first data signal 11 and the first data signal 12 into a path of second data signal in the byte interleaving manner.

It can be understood that in a case where the multiple paths of first data signals are correctly synchronized, the second data signal is the above-mentioned third data signal; however, in a case where the false synchronization occurs, the second data signal is not the above-mentioned third data signal.

In step 102, perform PON synchronization verification on the second data signal.

In some embodiments, the PON synchronization verification is performed on the second data signal by a PON synchronization state machine, and the PON synchronization state machine includes a search state, a pre-synchronization state, a synchronization state, and a re-synchronization state. In a case where the PON synchronization state machine loses synchronization in any state, or in a case where the PON synchronization state machine re-enters the search state, it is determined that the second data signal does not successfully pass the PON synchronization verification. Or, in a case where the PON synchronization state machine is in the synchronization state, determining that the second data signal passes the passive optical network synchronization verification.

That the PON synchronization state machine loses synchronization in a target state, means that the PON synchronization state machine fails in verification when performing the corresponding verification on the second data signal in the target state. The target state may be any state of the PON synchronization state machine.

In a case where the second data signal is an uplink data signal, the PON synchronization state machine may be called an uplink PON synchronization state machine; and in a case where the second data signal is a downlink data signal, the PON synchronization state machine may be called a downlink PON synchronizations state machine. In some examples, a verification mechanism used by the uplink PON synchronization state machine may be different from a verification mechanism of the downlink PON synchronization state machine.

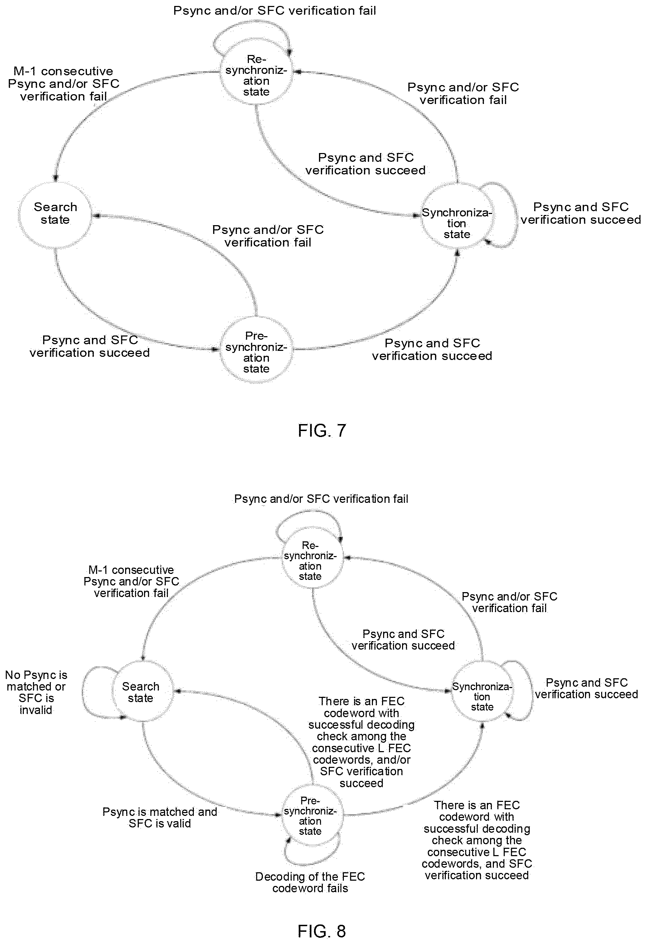

In some embodiments, as shown in FIG. 7, the verification mechanism used by the downlink PON synchronization state machine includes Psync verification and SFC verification. The Psync verification includes: searching for a field that matches a preset Psync. The SFC verification includes: verifying whether a bit sequence with a preset number of bits located after the Psync constitutes a valid SFC structure.

Referring to FIG. 7, the specific running process of the downlink PON synchronization state machine includes the following content.

Starting from the search state, the Psync field is searched in the second data signal. If it is confirmed that the searched Psync field matches a Psync field specified in the related standard, it is verified whether the bit sequence with the preset number of bits after the Psync field in the second data signal constitutes the valid SFC structure. If not, it remains in the search state and continues to search for the Psync field; if so, the search state is switched to the pre-synchronization state.

After being switched to the pre-synchronization state, respective PON frames are identified in the second data signal, and Psync verification and SFC verification are performed on the respective PON frames. If either of the Psync verification and the SFC verification fails, it is switched to the search state; and if the Psync verification and the SFC verification are successful, it is switched to the synchronization state.

After being switched to the synchronization state, the Psync verification and the SFC verification are continued to be performed on the remaining PON frames in the second data signal. If either of the Psync verification and the SFC verification fails, it is switched to the re-synchronization state; and if the Psync verification and the SFC verification are successful, it remains in the synchronization state.

After being switched to the re-synchronization state, the Psync verification and the SFC verification are continued to be performed on the PON frame in the second data signal. If the Psync verification and the SFC verification on a PON frame are successful, it is switched to the synchronization state, if the Psync verification and the SFC verification on a PON frame fail, it remains in the re-synchronization state; and if the Psync verification and/or the SFC verification on each PON frame of consecutive M-1 PON frames fail, it re-enters the search state. M is an integer greater than 1.

In some other embodiments, as shown in FIG. 8, a verification mechanism used by the downlink PON synchronization state machine includes Psync verification, SFC verification, and FEC verification. Specific implementation details of the Psync verification and the SFC verification may refer to the above content and will not be repeated here. The FEC verification may include: determining a boundary position of FEC codewords in the downlink data stream according to the aforementioned Psync field, and then performing decoding check on each FEC codeword.

Referring to FIG. 8, the specific running process of the downlink PON synchronization state machine includes the following content.

Starting from the search state, the Psync field is searched in the second data signal. If it is confirmed that the searched Psync field matches a Psync field specified in the related standard, it is verified whether the bit sequence with the preset number of bits after the Psync field in the second data signal constitutes the valid SFC structure. If not, it remains in the search state and continues to search for the Psync field; if so, the search state is switched to the pre-synchronization state.

After being switched to the pre-synchronization state, the decoding check is performed on the FEC codeword in the second data signal; and the SFC verification is performed on the respective PON frames in the second data signal. When the decoding on a FEC codeword fails, it remains in the pre-synchronization state, and the decoding check is continued to be performed on a next FEC codeword in the second data signal. If there is an FEC codeword with successful decoding check among L FEC codewords, and the SFC verification is successful, the pre-synchronization state is switched to the synchronization state; or if there is no FEC codeword with successful decoding check among the L FEC codewords, or the SFC verification fails, it is switched to the search state. L is a positive integer.

After being switched to the synchronization state, the Psync verification and the SFC verification are performed on the respective PON frames in the second data signal. If the Psync verification and the SFC verification are successful, it remains in the synchronization state; if the Psync verification fails and/or the SFC verification fails, the synchronization state is switched to the re-synchronization state.

After being switched to the re-synchronization state, the Psync verification and the SFC verification are continued to be performed on the PON frame in the second data signal. If the Psync verification and the SFC verification on a PON frame are successful, it is switched to the synchronization state, if the Psync verification and/or the SFC verification on a PON frame fails, it remains in the re-synchronization state; and if the Psync verification and/or the SFC verification on each PON frame of consecutive M-1 PON frames fail, it re-enters the search state. M is an integer greater than 1.

The verification mechanism for the uplink PON synchronization state machine may be used as a judgment basis for the delimiting success of the demarcation of the synchronization header of the delimiter and the success of the check of a frame header of a framing sublayer (FS) of a physical frame payload. Due to the uplink burst signal of the PON system, each uplink burst frame needs to be re-synchronized. Here, the framing sublayer (FS) of the physical frame payload includes an FS frame header, an FS frame payload and an FS tail. Also, due to the frame structure of the physical frame payload, the data of the FS frame header may be protected by the HEC code, so the HEC verification may be performed on data of the FS frame head part.

In some embodiments, the data synchronization method also includes: in a case where the second data signal does not successfully pass the PON synchronization verification within a second preset duration, sending indication information for indicating re-recovering data, to an optical module or a passive optical network device that generates the multiple paths of first data signals. It can be understood that if the second data signal does not pass the PON synchronization verification for a long time, the multiple paths of first data signals transmitted by the optical module or the passive network device to the synchronization apparatus 404 may have errors. Therefore, by sending the indication information for indicating re-recovering data to the optical module or the passive optical network device, it may be enabled that the optical module or the passive optical network device can transmit the correct multiple paths of first data signals to the synchronization apparatus 404.

In a case where the second data signal passes the PON synchronization verification, the following step 103 is performed; or in a case where the second data signal does not pass the PON synchronization verification, it is turned to perform the above step 101.

In step 103, in a case where the second data signal passes the PON synchronization verification, determine that synchronization is successful.

In some embodiments, in a case where the synchronization is successful, the PON frame may be identified from the second data signal.

In the data synchronization method provided in some embodiments of the present disclosure, the PON synchronization verification is performed on the high-speed data signal recovered from the data, to judge whether the false synchronization occurs; and in the case where the false synchronization occurs, the aligning and recovering operation is re-performed on the multiple paths of low-speed data signals, to increase the synchronization success rate of the multiple paths of low-speed data signals.

It can be understood that the above method may be implemented by the synchronization apparatus 404. To implement the above functions, the synchronization apparatus of the passive optical network may include corresponding hardware structures or software modules for performing the respective functions. It should be easy for those skilled in the art to consider that some embodiments of the present disclosure may be implemented in the form of hardware or in the combined form of hardware and computer software, in conjunction with the units and algorithm steps of the examples as described in the embodiments disclosed herein. Whether a certain function is performed via hardware or computer software driving hardware, depends on the specific application and restrictive conditions on design of the technical solutions. Professional technicians may use different methods to implement the described functions for each specific application, but such implementation should not be considered beyond the scope of the present disclosure.

In some embodiments of the present disclosure, the data synchronization method for the passive optical network may be divided into functional modules according to the above-mentioned method embodiments. For example, each functional module may be divided corresponding to each function. The above-mentioned integrated module may be implemented in the form of hardware or may be implemented in the form of software functional modules. It should be noted that the division of modules in some embodiments of the present disclosure is illustrative, and is merely a kind of logical functional division, and there may be other division methods in actual implementations.

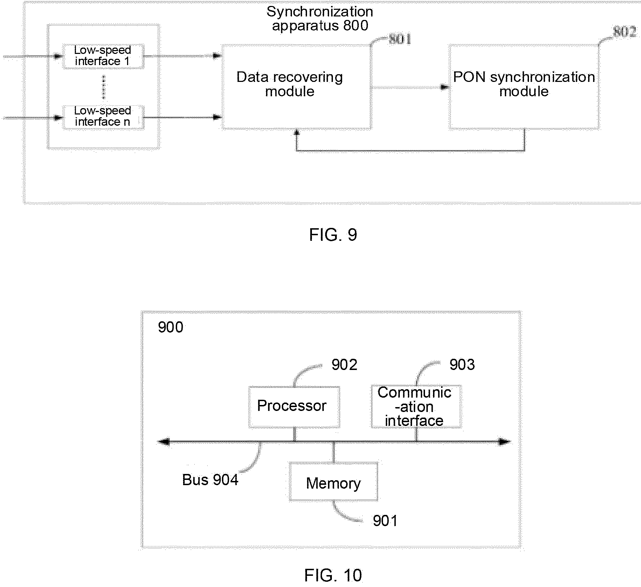

FIG. 9 shows a possible structural schematic diagram of the synchronization apparatus involved in the above embodiments. As shown in FIG. 9, some embodiments of the present disclosure provide a synchronization apparatus 800. The synchronization apparatus 800 includes a data recovering module 801 and a PON synchronization module 802.

The data recovering module 801 is configured to perform an aligning and recovering operation, and the aligning and recovering operation includes performing synchronization alignment on multiple paths of first data signals, and recovering aligned multiple paths of first data signals into a path of a second data signal.

The PON synchronization module 802 is configured to perform PON synchronization verification on the second data signal; and in a case where the second data signal does not pass the PON synchronization verification, indicates the data recovering module 801 to return to perform the the aligning and recovering operation, or in a case where the second data signal passes the PON synchronization verification, determining that synchronization is successful.

In some embodiments, the data recovering module 801 is configured to: search for synchronization information of respective paths of first data signals among the multiple paths of first data signals, based on a first corresponding relationship, where the first corresponding relationship is used to indicate the synchronization information corresponding to the respective paths of first data signals; and after the synchronization information corresponding to the respective paths of first data signals is successfully searched out, align the respective paths of first data signals based on searched synchronization information corresponding to the respective paths of first data signals.

In some embodiments, the data recovering module 801 is further configured to: in a case where the synchronization information corresponding to the respective paths of first data signals is still not successfully searched out after a first preset duration, search for synchronization information of respective paths of first data signals among the multiple paths of first data signals based on a second corresponding relationship, where the second corresponding relationship is used to indicate the synchronization information corresponding to the respective paths of first data signals, and synchronization signal corresponding to at least one path of a first data signal in the second corresponding relationship is different from synchronization information corresponding to the at least one path of a first data signal in the first corresponding relationship.

**In** some other embodiment, the data recovering module 801 is configured to: perform multiple search operations simultaneously, where respective search operations are used to search for synchronization information of respective paths of first data signals among the multiple paths of first data signals based on corresponding relationships corresponding to the search operations, different search operations correspond to different corresponding relationships, and the corresponding relationships are used to indicate the synchronization information corresponding to the respective paths of first data signals; and after the synchronization information corresponding to the respective paths of first data signals is successfully searched out through a target search operation, align the respective paths of first data signals based on the synchronization information corresponding to the respective paths of first data signals searched by the target search operation, where the target search operation is any one search operation of the multiple search operations.

In some embodiments, the PON synchronization module 802 is configured to: perform the PON synchronization verification on the second data signal by a PON synchronization state machine, where the PON synchronization state machine includes a search state, a pre-synchronization state, a synchronization state, and a re-synchronization state; and in a case where the PON synchronization state machine loses synchronization in any state, or in a case where the PON synchronization state machine re-enters the search state, determine that the second data signal does not successfully pass the PON synchronization verification.

In some embodiments, the PON synchronization module 802 is further configured to: in a case where the second data signal does not successfully pass the PON synchronization verification within a second preset duration, sending indication information for indicating re-recovering data, to an optical module or a passive optical network device that generates the multiple paths of first data signals.

Of course, the synchronization apparatus 800 of the passive optical network includes, but is not limited to, the unit modules listed above. Also, the specifically implemented functions of the above functional units include but are not limited to functions corresponding to the method steps of the above embodiments. The detailed description of the other modules of the data synchronization apparatus 800 of the passive optical network may refer to the detailed description of its corresponding method steps, and will not be repeated here.

The above-mentioned synchronization apparatus may be implemented in a structure of an electronic device shown in FIG. 10. As shown in FIG. 10, the electronic device 900 includes a processor 902 and a bus 904. In some embodiments, the electronic device 900 may also include at least one of a memory 901 or a communication interface 903.

The processor 902 may be implement or perform various exemplary logical blocks, modules and circuits that are described in conjunction with the present disclosure. The processor 902 may be a central processing unit (Central Processing Unit, CPU), a general-purpose processor, a digital signal processor, an application specific integrated circuit, a field programmable gate array or other programmable logic devices, a transistor logic device, a hardware component or any combination thereof. The processor 902 may also be a combination that implements computing functions. For example, the processor 902 is a combination of one or more microprocessors, a combination of a digital signal processor (DSP) and a microprocessor, or the like.

The communication interface 903 is configured to connect with other devices via a communication network. The communication network may be an Ethernet, a radio access network, a wireless local area network (Wireless Local Area Networks, WLAN), or the like.

The memory 901 may be a read-only memory (Read-Only Memory, ROM) or other types of static storage devices capable of storing static information and instructions, a random access memory (Random Access Memory, RAM) or other types of dynamic storage devices capable of storing information and instructions, or may also be an electrically erasable programmable read-only memory (Electrically Erasable Programmable Read-Only Memory, EEPROM), a magnetic disk storage medium or other magnetic storage devices, or any other medium capable of being used to carry or store the desired program codes in the form of instructions or data structures and capable of being accessed by a computer, but the present disclosure is not limited thereto.

In some embodiments, the memory 901 may exist independently of the processor 902, and the memory 901 may be connected to the processor 902 via the bus 904 and is used for storing instructions or program codes executable by the processor 902. The processor 902, when calling and executing the instructions or program codes stored in the memory 901, is capable of implementing the direct communication method provided by some embodiments of the present disclosure.

In some other embodiments, the memory 901 may also be integrated with the processor 902.

The bus 904 may be an extended industry standard architecture (Extended Industry Standard Architecture, EISA) bus or the like. Buses 904 may be divided into address buses, data buses, control buses, and the like. For the convenience of representation, only one thick line is used in FIG. 10 for representation, but it does not mean that there is only one bus or one type of bus.

The embodiments of the present disclosure also provide a computer-readable storage medium. The computer-readable storage medium stores computer instructions, and the computer instructions, when executed on the above electronic device, cause the electronic device to perform various functions or steps in the above method embodiments. For example, the computer-readable storage media may include read-only memory (Read-Only Memory, ROM), random access memory (Random Access Memory, RAM), read-only optical discs (Compact Disc Read-Only Memory, CD-ROM), magnetic tape, floppy disk, and optical data storage device, etc.

The plurality of embodiments of the present disclosure may be implemented in hardware or a dedicated circuit, software, a logic, or any combination thereof. For example, some embodiments may be implemented in hardware, while other embodiments may be implemented in firmware or software that may be executed by a controller, a microprocessor or other computing apparatuses, but the present disclosure is not limited thereto. The embodiments of the present disclosure may be implemented by executing computer program instructions by a data processor of an information transmission apparatus. For example, the embodiments of the present disclosure are implemented through performing computer program instructions by a processor entity, or hardware, or a combination of software and hardware. The computer program instructions may be assembly instructions, instruction set architecture (Instruction Set Architecture, ISA) instructions, machine instructions, machine-related instructions, microcodes, firmware instructions, state setting data, or source codes or target codes written in any combination of one or more programming languages.

The block diagram of any of the logic procedures illustrated in the drawings of the present disclosure may represent program steps, or may represent interconnected logic circuits, modules and functions, or may represent a combination of program steps with logic circuits, modules and functions. The computer program may be stored in a memory. The memory may have any type applicable to a local technical environment and may be implemented by using any data storage technology, such as read-only memory (Read-Only Memory, ROM), random access memory (Random Access Memory, RAM), optical memory apparatus and system (digital multi-function optical discs (Digital Video Disc, DVD), or Compact Disk (CD)), but the present disclosure is not limited thereto. The computer-readable media may include a non-transitory storage medium. The data processor may be any type of processor applicable to the local technical environment, for example, general-purpose computer, dedicated-purpose computer, microprocessor, digital signal processor (Digital Signal Processor, DSP), application specific integrated circuit (Application Specific Integrated Circuit, ASIC), programmable logic device (Field Programmable Gate Array, FPGA) or processor based on a multi-core processor architecture, but the present disclosure is not limited thereto.

The foregoing is only the specific embodiments of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be determined based on the protection scope of claims.

## Claims

1. A data synchronization method for a passive optical network, **characterized by** comprising:
performing an aligning and recovering operation comprising: performing synchronization alignment on multiple paths of first data signals, and recovering aligned multiple paths of first data signals into a path of a second data signal;
performing passive optical network synchronization verification on the second data signal; and
in a case where the second data signal does not pass the passive optical network synchronization verification, returning to the aligning and recovering operation; or in a case where the second data signal passes the passive optical network synchronization verification, determining that synchronization is successful.

2. The method according to claim 1, wherein performing the synchronization alignment on the multiple paths of first data signals, comprises:
searching for synchronization information of respective paths of first data signals among the multiple paths of first data signals, based on a first corresponding relationship, wherein the first corresponding relationship is used to indicate the synchronization information corresponding to the respective paths of first data signals; and
after the synchronization information corresponding to the respective paths of first data signals is successfully searched out, aligning the respective paths of first data signals based on searched synchronization information corresponding to the respective paths of first data signals.

3. The method according to claim 2, further comprising:
in a case where the synchronization information corresponding to the respective paths of first data signals is not successfully searched out after a first preset duration, searching for synchronization information of respective paths of first data signals among the multiple paths of first data signals based on a second corresponding relationship, wherein the second corresponding relationship is used to indicate the synchronization information corresponding to the respective paths of first data signals, and synchronization information corresponding to at least one path of a first data signal in the second corresponding relationship is different from synchronization information corresponding to the at least one path of a first data signal in the first corresponding relationship.

4. The method according to claim 1, wherein performing the synchronization alignment on the multiple paths of first data signals, comprises:
performing multiple search operations simultaneously, wherein respective search operations are used to search for synchronization information of respective paths of first data signals among the multiple paths of first data signals based on corresponding relationships corresponding to the search operations, different search operations correspond to different corresponding relationships, and the corresponding relationships are used to indicate the synchronization information corresponding to the respective paths of first data signals; and
after the synchronization information corresponding to the respective paths of first data signals is successfully searched out through a target search operation, aligning the respective paths of first data signals based on the synchronization information corresponding to the respective paths of first data signals searched by the target search operation, wherein the target search operation is any one search operation of the multiple search operations.

5. The method according to any one of claims 2 to 4, wherein
for an uplink transmission, the synchronization information corresponding to the respective paths of first data signals among the multiple paths of first data signals is obtained by splitting all or a part of fields in an uplink physical synchronization block; or
for a downlink transmission, the synchronization information corresponding to the respective paths of first data signals among the multiple paths of first data signals is obtained by splitting all or a part of fields in a downlink physical synchronization block.

6. The method according to claim 1, wherein performing the passive optical network synchronization verification on the second data signal, comprises:
performing the passive optical network synchronization verification on the second data signal by a passive optical network synchronization state machine, wherein the passive optical network synchronization state machine comprises a search state, a pre-synchronization state, a synchronization state, and a re-synchronization state; and
in a case where the passive optical network synchronization state machine loses synchronization in any state, determining that the second data signal does not successfully pass the passive optical network synchronization verification; or in a case where the passive optical network synchronization state machine re-enters the search state, determining that the second data signal does not successfully pass the passive optical network synchronization verification; or in a case where the passive optical network synchronization state machine is in the synchronization state, determining that the second data signal passes the passive optical network synchronization verification.

7. The method according to claim 1 or 6, further comprising:
in a case where the second data signal does not successfully pass the passive optical network synchronization verification within a second preset duration, sending indication information for indicating re-recovering data, to an optical module or a passive optical network device that generates the multiple paths of first data signals.

8. A synchronization apparatus, comprising:
a data recovering module, configured to perform an aligning and recovering operation, wherein the aligning and recovering operation comprises performing synchronization alignment on multiple paths of first data signals, and recovering aligned multiple paths of first data signals into a path of a second data signal; and
a passive optical network synchronization module, configured to perform passive optical network synchronization verification on the second data signal; and in a case where the second data signal does not pass the passive optical network synchronization verification, indicate the data recovering module to return to perform the aligning and recovering operation, or in a case where the second data signal passes the passive optical network synchronization verification, determine that synchronization is successful.

9. An electronic device, **characterized by** comprising:
a processor; and
a memory, configured to store instructions executable by the processor;
wherein the processor is configured to perform the instructions to cause the electronic device to perform the data synchronization method for the passive optical network according to any one of claims 1 to 7.

10. A data synchronization system, **characterized by** comprising: a data splitting apparatus, a first passive optical network device, a second passive optical network device, and a synchronization apparatus, that are connected in sequence;
wherein the data splitting apparatus is configured to split a third data signal into multiple paths of first data signals, and transmit the multiple paths of first data signals to the synchronization apparatus via the first passive optical network device and the second passive optical network device; and
the synchronization apparatus is configured to perform the data synchronization method for the passive optical network according to any one of claims 1 to 7.

11. A computer-readable storage medium for storing computer instructions, **characterized in that** the computer instructions, when being executed on an electronic device, cause the electronic device to perform the data synchronization method for the passive optical network according to any one of claims 1 to 7.
